# EUROPEAN PATENT SPECIFICATION

(11) **EP 3 831 869 B1**
(45) Date of publication and mention of the grant of the patent: **06.03.2024**
(21) Application number: 19213880.8
(22) Date of filing: 05.12.2019
(51) Int. Cl.: C08J 9/00, C08J 9/232, C08L 25/06, C08K 3/04, C08L 25/12, C08L 33/12, C08L 75/00

(54) **COMPOSITE POLYSTYRENE FOAM MOLDING WITH LOW THERMAL CONDUCTIVITY**
POLYSTYROLSCHAUMSTOFFVERBUNDFORMKÖRPER MIT GERINGER WÄRMELEITFÄHIGKEIT
MOULAGE DE MOUSSE DE POLYSTYRÈNE COMPOSITE PRÉSENTANT UNE FAIBLE CONDUCTIVITÉ THERMIQUE

(43) Date of publication of application: 09.06.2021
(73) Proprietor: BASF SE, 67056 Ludwigshafen am Rhein (DE)
(72) Inventor: SCHERZER, Dietrich, 67433 Neustadt (DE); DIETZEN, Franz-Josef, 67056 Ludwigshafen (DE); HAVERKEMPER, Gregor, 67056 Ludwigshafen (DE); BELLIN, Ingo, 67056 Ludwigshafen (DE)
(74) Representative: BASF IP Association

(56) References cited:
- EP-A1- 2 562 207
- WO-A1-2017/021047
- US-A- 5 137 927

## Description

The present invention relates to composite polystyrene foam panel with low thermal conductivity.

### Relevant Prior Art

EP 0 981 574 A1 discloses expandable styrene polymers containing graphite in a homogeneous distribution to improve the thermal insulation properties of polystyrene particle foams at low densities. According to the teaching of EP 0 981 574 A1 such foams have a thermal conductivity under 35 mW/m*K at a density of 10 g/l.

WO 2004/065468 and EP 2287241 A1 relate to foamed insulating materials which have been made from pigmented and unpigmented expandable styrene polymer particles or from styrene polymer particles with different degrees of pigmentation, which do not show uncontrolled shape change when exposed to sun light and are especially advantageous in sheet form for thermal insulation of building facades.

Porous polymer foams, having pores in the size range of a few microns or significantly below and a high porosity of at least 70 % are particularly good thermal insulators on the basis of theoretical considerations. Such porous materials having a small average pore diameter can be, for example, in the form of organic aerogels or xerogels which are produced with a sol-gel process and subsequent drying. However, the materials properties, in particular the mechanical stability and/or the compressive strength of the known porous materials based on polyurea are not satisfactory for all applications.

WO 2013/075994 discloses a method for continuously producing nanoporous polymer foam materials by impregnating a thermoplastic polymer melt with a blowing agent in the supercritical state and depressurization at high depressurization rates. The nanoporous polymer foam can be comminuted to nanoporous polymer foam particles and used as filling materials for vacuum insulation panels.

WO 2017/125414 relates to a process for producing isocyanate-based aerogels and xerogels with low density, sufficient mechanical stability and a low thermal conductivity at ambient pressure. WO 2012/113759 relates to a method for producing powdery organic porous materials from organic xerogel or organic aerogel by comminuting and their use in vacuum insulation panels.

EP 3 278 956 A1 relates to multi-layer sheet by connecting at least one thinner thermoplastic foam sheet, such as an extruded polystyrene foam sheets (XPS) or particle foam sheet made from expandable polystyrene (EPS) and at least one thinner plate made from a nanocellular foam having a mean cell diameter below 1000 nm, such as inorganic or organic aerogels and/or xerogels.

US 5,137,927 discloses a composite foam of low thermal conductivity, comprising 20 - 80% by volume of silica aerogel particles and 20 - 80% by volume of styrene polymer foam particles.

The present invention was made in view of the prior art described above, and the object of the present invention is to provide composite foam based on pre-foamed particles of expandable polystyrene with low density and low thermal conductivity. The composite foam boards should be obtainable by welding with steam without using adhesives and processable on building side like standard boards of expandable polystyrene.

To solve the problem, the present invention provides a composite styrene polymer foam molding having a density in the range of from 10 to 50 kg/m³ and comprising
a) 15 - 50% by volume, preferably 20 - 40% by volume of organic nanoporous particles A), and
b) 85 - 50% by volume, preferably 80 - 60% by volume of pre-foamed styrene polymer particles B).

In a first embodiment the composite styrene polymer foam molding comprises organic aerogels or xerogels as organic nanoporous particles A), preferably comminuted particles of a monolithic aerogel based on polyurethane, polyurea or polyisocyanurate or mixtures thereof.

In a second embodiment the composite styrene polymer foam molding comprises nanoporous thermoplastic polymer particles, preferably foam particles of polystyrene, styrene-acrylonitrile copolymers or polymethyl methacrylate (PMMA). Preferred are nanoporous thermoplastic foam particles having a cell count in the range from 1000 to 100.000 cells/mm.

Most preferably polystyrene foam particles having a cell count in the range from 1000 to 100.000 cells/mm as organic nanoporous particles A) are used.

Components A) and B) are described in more detail below.

The composite styrene polymer foam molding has a density in the range from 10 to 50 kg/m³.

The composite styrene polymer foam molding preferably has a thermal conductivity (λ) determined at 10°C according to DIN EN 12667:2001-05 between 25 to 30 mW/(m*K).

The composite styrene polymer foam molding may be prepared by mixing pre-expanded styrene polymer foam particles with the organic nanoporous particles in the above-mentioned ratios and steam-chest molding using steam at pressures below 3 bar.

A preferred process for producing the composite styrene polymer foam molding according to the invention comprises the steps of
(a) pre-foaming expandable polystyrene to styrene polymer foam particles with a density in the range from 10 to 30 kg/m³,
(b) mixing the styrene polymer foam particles from step (a) with organic nanoporous particles,
(c) filling the mixture obtained in step b) in a mold and welding the mixture with steam to form the composite styrene polymer foam molding.

In a first embodiment in step (b) 85 - 50% by volume, most preferably 80 - 60% by volume of the styrene polymer foam particles B) are mixed with 15 - 50% by volume, most preferably 20 - 40% by volume of aerogels or xerogels as organic nanoporous particles A), preferably comminuted particles of a monolithic aerogel based on polyurethane, polyurea or polyisocyanurate or mixtures thereof.

In a second embodiment in step (b) 85 - 50% by volume, most preferably 80 - 60% by volume of the styrene polymer foam particles B) are mixed with 15 - 50% by volume, most preferably 20 - 40% by volume of nanoporous thermoplastic polymer particles A), preferably polystyrene foam particles having a cell count in the range from 1000 to 100.000 cells/mm as organic nanoporous particles.

More preferably in step (b) 85 - 50% by volume, most preferably 80 - 60% by volume of the styrene polymer foam particles are mixed with 15 - 50% by volume, most preferably 20 - 40% by volume of comminuted monolithic aerogel, based on polyurethane, polyurea or polyisocyanurate or mixtures thereof, having a number weighted mean particle size in the range from 1 to 5 mm.

### Component A)

In a first embodiment component A) is selected from aerogels or xerogels, preferably comminuted particles of a monolithic aerogel based on polyurethane, polyurea or polyisocyanurate or mixtures thereof.

Inorganic aerogels as such are well known in the art, they are preferably prepared by the sol-gel method and are described for example in EP-A 2,665,876, WO 2010/046074 or EP-A 2,597,072. An inorganic aerogel is commercially available from BASF SE under the tradename Slentex^{®}.

Organic aerogels are also known to those skilled in the art as such. They are preferably made according to the sol-gel process and are described for example in WO 2012/000917, WO 2016/008726, WO 2014/187710 or WO 2015/144675. An organic aerogel is commercially available from BASF SE under the tradename Slentite^{®}.

Aerogels are porous materials, which are obtainable by pouring a sol in a molding followed by drying through solvent exchange with supercritical carbon dioxide (scCO2). Preferred aerogels are based on polyurethanes (PU) or polyurea (PUR). The organic Aerogel is preferable a monolithic aerogel based on polyurethane (PU), polyurea or polyisocyanurate (PIR) or mixtures thereof. Preferred aerogels may be produced by reacting a mixture (A) comprising at least one polyfunctional isocyanate (a1), at least one aromatic amine (a2), and at least a catalyst (a3) in the presence of a solvent (B) to form a gel and drying the gel obtained under supercritical conditions, as described in more detail below.

Possible polyfunctional isocyanates are aromatic, aliphatic, cycloaliphatic and/or araliphatic isocyanates with two or more isocyanate groups per molecule.

As polyfunctional isocyanates (a1), preference is given to aromatic isocyanates. Particularly preferred polyfunctional isocyanates of the component (a1) are the following embodiments:
(i) polyfunctional isocyanates based on tolylene diisocyanate (TDI), in particular 2,4-TDI or 2,6-TDI or mixtures of 2,4- and 2,6-TDI;
(ii) polyfunctional isocyanates based on diphenylmethane diisocyanate (MDI), in particular 2,2'-MDI or 2,4'-MDI or 4,4'-MDI or oligomeric MDI, also referred to as polyphenylpolymethylene isocyanate, or mixtures of two or three of the abovementioned diphenylmethane diisocyanates or crude MDI which is obtained in the production of MDI or mixtures of at least one oligomer of MDI and at least one of the abovementioned low molecular weight MDI derivatives;
(iii) mixtures of at least one aromatic isocyanate according to embodiment i) and at least one aromatic isocyanate according to embodiment ii).

Preferably, the aromatic amine (a2) is a polyfunctional aromatic amine.

The amines (a2) are preferably selected from the group consisting of 3,3',5,5'-tetraalkyl-4,4'-diaminodiphenylmethane, 3,3',5,5'-tetraalkyl-2,2'-diaminodiphenylmethane and 3,3',5,5'-tetraalkyl-2,4'-diaminodiphenylmethane, where the alkyl groups in the 3,3',5 and 5' positions can be identical or different and are each selected independently from among linear or branched alkyl groups which have from 1 to 12 carbon atoms and can bear further functional groups. The abovementioned alkyl groups are preferably methyl, ethyl, n-propyl, i-propyl, n-butyl, sec-butyl or t-butyl (in each case unsubstituted).

Composition (A) preferably further comprises at least one monool (am). In principle, any monool can be used in the context of the present invention. It is also possible according to the present invention that the composition (A) comprises two or more monools. The monool can be branched or linear. Primary, secondary or tertiary alcohols are suitable according to the present invention. Preferably, the monool (am) is a linear alcohol, more preferred a linear primary alcohol. The monool can be an aliphatic monool or an aromatic monool in the context of the present invention. Furthermore, the monool can also contain further functional groups as long as these do not react with the other components under the conditions of the process according to the present invention. The monool may for example contain C-C- double bonds or C-C triple bonds. The monool can for example be a halogenated monool, in particular a fluorinated monool such as a polyfluorinated monool or a perfluorinated monool.

According to a further embodiment, the present invention therefore is directed to the process for preparing a porous material as disclosed above, wherein the composition (A) comprises at least one monool (am).

The catalyst (a3) is preferably selected from the group consisting of dimethylcyclohexylamine, bis(2-dimethylaminoethyl) ether, N,N,N,N,N-pentamethyldiethylenetriamine, methylimidazole, dimethylimidazole, aminopropylimidazole, dimethylbenzylamine, 1,6-diazabicyclo[5.4.0]undec-7-ene, trisdimethylaminopropylhexahydrotriazine, triethylamine, tris(dimethylaminomethyl)phenol, triethylenediamine (diazabicyclo[2.2.2]octane), dimethylaminoethanolamine, dimethylaminopropylamine, N,N-dimethylaminoethoxyethanol, N,N,N-trimethylaminoethylethanolamine, triethanolamine, diethanolamine, triisopropanolamine, diisopropanolamine, methyldiethanolamine, butyldiethanolamine, metal acetylacetonates, ammonium carboxylates, and metal carboxylates such as acetates, propionates, sorbates, ethylhexanoates, octanoates, benzoates and citrates, ammonium phosphates and metal phosphates. Possible solvents (B) are, for example, ketones, aldehydes, alkyl alkanoates, amides such as formamide, N-methylpyrollidone, N-ethylpyrollidone, sulfoxides such as dimethyl sulfoxide, aliphatic and cycloaliphatic halogenated hydrocarbons, halogenated aromatic compounds and fluorine-containing ethers. Mixtures of two or more of the abovementioned compounds are likewise possible. Aldehydes and/or ketones are particularly preferred as solvent (B). Suitable aldehydes or ketones are, in particular, acetaldehyde, propionaldehyde, n-butyraldehyde, isobutyraldehyde, 2-ethylbutyraldehyde, valeraldehyde, isopentaldehyde, 2-methylpentaldehyde, 2-ethylhexaldehyde, acrolein, methacrolein, crotonaldehyde, furfural, acrolein dimer, methacrolein dimer, 1,2,3,6-tetrahydrobenzaldehyde, 6-methyl-3-cyclohexenaldehyde, cyanoacetaldehyde, ethyl glyoxylate, benzaldehyde, acetone, diethyl ketone, methyl ethyl ketone, methyl isobutyl ketone, methyl n-butyl ketone, methyl pentylketone, dipropyl ketone, ethyl isopropyl ketone, ethyl butyl ketone, diisobutylketone, 5-methyl-2-acetyl furan, 2-acetylfuran, 2-methoxy-4-methylpentan-2-one, 5-methylheptan-3-one, 2-heptanone, octanone, cyclohexanone, cyclopentanone, and acetophenone. The abovementioned aldehydes and ketones can also be used in the form of mixtures. Ketones and aldehydes having alkyl groups having up to 3 carbon atoms per substituent are preferred as solvent (B).

The components of mixture (A), for example the components (a1) and (a2), are preferably provided separately from one another, each in a suitable partial amount of the solvent (B). The separate provision makes it possible for the gelling reaction to be optimally monitored or controlled before and during mixing.

The gelling formation in step a) is a polyaddition reaction, in particular a polyaddition of isocyanate groups and amino groups. For the purposes of the present invention, a gel is a crosslinked system based on a polymer which is present in contact with a liquid (known as solvogel or lyogel, or with water as liquid: aquagel or hydrogel). Here, the polymer phase forms a continuous three-dimensional network.

Drying of the gel in step b) is carried out under supercritical conditions, preferably after replacement of the solvent by CO₂ or other solvents suitable for the purposes of supercritical drying. Such drying is known per se to a person skilled in the art. Supercritical conditions characterize a temperature and a pressure at which CO₂ or any solvent used for removal of the gelation solvent is present in the supercritical state. In this way, shrinkage of the gel body on removal of the solvent can be reduced.

In a second embodiment nanoporous thermoplastic polymer particles, preferably polystyrene foam particles having a cell count in the range from 1000 to 100.000 cells/mm as organic nanoporous particles. Such nanoporous thermoplastic polymer foam particles may be prepared by impregnating a thermoplastic polymer melt with a blowing agent in the supercritical state and depressurization at high depressurization rates as described in WO 2013/075994.

As nanoporous polymer particles, it is possible to use particles comprising polystyrene, polymethyl methacrylate (PMMA), polycarbonate, styrene-acrylonitrile copolymers, polysulfones, polyether sulfone, polyetherimide, polyurethane, melamine-, phenol-, resorcinol-, urea-formaldehyde resins or mixtures thereof. Preference is given to using nanoporous polymer particles composed of polystyrene, styrene-acrylonitrile copolymers or polymethyl methacrylate (PMMA).

The nanoporous polymer particles have an average cell count in the range from 1000 to 100 000 cells/mm, preferably from 2000 to 50 000 and particularly preferably from 5000 to 50 000 cells/mm. The foam density is usually in the range from 50 to 350 kg/m³, preferably in the range from 50 to 300 kg/m³, particularly preferably in the range from 10 to 250 kg/m³.

According to the invention, the term "nanoporous" comprises pore sizes in the range from 5 to 1000 nanometers.

According to the invention, the term "average cell count" refers to the number of cells per mm. It can be determined from the average diameter of circular foam cells having cross-sectional areas equivalent to the real cells in typical frequency/size curves, as can be determined by evaluation of at least 10 real cell areas on representative electron micrographs.

The organic porous material is comminuted in a step c) to produce nanoporous particles. The comminution can be effected in one stage or in a plurality of stages, in the latter case in one or more different apparatuses as described in WO 2012/113759. For example, the material used can be subjected first to a precomminution and then to a postcomminution. A postcomminution can advantageously be effected in a granulator.

Useful apparatuses for comminution include especially screw crushers, rotary shredders, single-shaft and multishaft crushers, roll mills, fine mills, pulverizers, impact disk mills and hammer mills.

Processes and apparatuses for comminution of organic materials are widely known to those skilled in the art. The person skilled in the art selects a suitable apparatus as a function of the amount to be comminuted, the desired throughput, the particle size to be achieved and the brittleness of the material used.

For the comminution of the organic nanoporous particles used in accordance with the invention, universal rotor mills in particular have been found to be suitable. Nanoporous thermoplastic polymer foams, prepared by impregnating a thermoplastic polymer melt with a blowing agent in the supercritical state, can also be comminuted, directly after the depressurization step by a pelletizer or underwater pelletizer, which are also often used for unfoamed thermoplastic melts.

The organic nanoporous particles preferably has a number-weighted mean particle size in the range from 0.1 to 10 mm, more preferably from in the range from 1 to 5 mm. Processes for determining particle size are known to those skilled in the art. For example, particle size can be determined by air classification or in the sieve analysis in accordance with DIN 66165.

### Component B)

The pre-expanded foam particles B) are pre-foamed expandable polystyrene (EPS). Expandable styrene polymers (EPS) are styrene polymers comprising blowing agent.

Preferably the pre-expanded foam particles B) have an average cell count in the range from 0.1 to 100 cells/mm. The foam density is usually in the range from 10 to 50 kg/m³, preferably in the range from 12 to 30 kg/m³.

Preferably the pre-foamed polystyrene particles comprise 1 to 10% by weight of an IR-absorber.

Expandable polystyrene can be produced by any process known by the person skilled in the art, such as suspension polymerization of styrene in aqueous suspension in the presence of low-boiling blowing agents or by impregnation of a polystyrene melt with a low-boiling blowing agent in an extruder. Expandable styrene polymers containing infrared-absorber, such as graphite, can be obtained as described in EP 0 981 574 A1.

Preferably the expandable polystyrene and the pre-foamed polystyrene particles comprise carbon particles as infrared absorber. Carbon particles used can be various natural or synthetic carbon blacks or graphites. It is preferable that the carbon particles comprise a proportion of at least 1% by weight, preferably at least 5% by weight, of graphitic structures. It is preferable that the ash content of the carbon particles, determined in accordance with DIN 51903, is from 0.005 to 15% by weight, preferably from 0.01 to 10% by weight. It is particularly preferable to use graphite particles with average particle size in the range from 1 to 50 µm.

The graphite preferably used preferably has an average particle size of from 1 to 50 µm, in particular from 2.5 to 12 µm, a bulk density from 100 to 500 g/l, and a specific surface area from 5 to 20 m²/g. Natural graphite or ground synthetic graphite can be used.

The proportion of the entirety of all of the carbon particles is preferably in the range from 0.1 to 10 percent by weight, in particular from 1 to 6 percent by weight, based on styrene polymer.

### Examples

Hereinafter, the present invention is described in more detail and specifically with reference to the Examples, which however are not intended to limit the present invention.

Thermal conductivity (λ) of insulation sheets were determined at 10°C according to DIN EN 12667:2001-05.

### Raw materials:

| | |
|---|---|
| Neopor^{®} F 5200 Plus | Graphite-containing EPS, pentane content ca. 5.3 wt.-%, bead size 1.2 - 1.6 mm, flame retardant, produced by extrusion. |
| Slentite^{®} | Granulated plate of PU-Nanofoam with different sieve fraction: particle sizes a) between 2 and 4 mm, b) < 2 mm and c) > 4 mm. |

### Example 1 to 4

Graphite-containing EPS particles (Neopor^{®} F 5200) were prefoamed with steam to foam particles with a bulk density of 15 kg/m³, mixed with granulated Slentite^{®} (2-4 mm) in the ratio (V/V) as indicated in table 1 converted into a molded test board in a conventional steam-chest molder.

### Example 5-7

Example 1 was repeated but granulated Slentite^{®} with particle sizes above 4 mm (Example 5), below 2 mm (Example 6) and with mixed sieve fraction (< 2, 2 - 4, > 4 mm) (Example 7) were used

### Comparative Example C1

Graphite-containing EPS particles (Neopor^{®} F 5200) were prefoamed with steam to foam particles with a bulk density of 15 kg/m³ and converted into a molded test board in a conventional steam-chest molder.

Density and thermal conductivity of molded samples of Example 1 to 7 and comparative example C1 are summarized in Table 1.

**Table 1: Composition and properties of composite foam moldings of Examples 1 - 7 and comparative Example C1**

| Example | Neopor^{®} F 5200 [Vol.-%] | Slentit^{®} [Vol.-%] | Density of molded test board | Thermal Conductivity [mW/mK] |
|---|---|---|---|---|
| C1 | 100 | | 16.4 | 30.4 |
| 1 | 80 | 20 (2 - 4 mm) | 25.7 | 27.8 |
| 2 | 70 | 30 (2 - 4 mm) | 33.8 | 27.5 |
| 3 | 65 | 35 (2 - 4 mm)) | 38.8 | 28.0 |
| 4 | 60 | 40 (2 - 4 mm) | 36.6 | 27.4 |
| 5 | 80 | 20 (> 4mm) | 26.8 | 27.6 |
| 6 | 80 | 20 (< 2 mm) | 25.0 | 28.9 |
| 7 | 80 | 20 (mixed) | 28.6 | 27.8 |

## Claims

1. A composite styrene polymer foam molding having a density in the range from 10 to 50 kg/m³ and comprising
a) 15 - 50% by volume of organic nanoporous particles, and
b) 85 - 50% by volume of pre-foamed styrene polymer particles.

2. The composite styrene polymer foam molding according to claim 1, wherein the organic nanoporous particles are nanoporous thermoplastic foam particles having a cell count in the range from 1000 to 100.000 cells/mm.

3. The composite styrene polymer foam molding according to claim 1, wherein the organic nanoporous particles are comminuted particles of a monolithic aerogel based on polyurethane, polyurea or polyisocyanurate or mixtures thereof.

4. The composite styrene polymer foam molding according to any of claims 1 to 3, wherein the pre-foamed polystyrene particles comprise 1 to 10% by weight of an IR-absorber.

5. The composite styrene foam molding according to any of claims 1 to 4, wherein the density of the pre-foamed styrene polymer particles is in the range from 10 to 50 kg/m³.

6. The composite styrene foam molding according to any of claims 1 to 5, wherein the thermal conductivity (λ) determined at 10°C according to DIN EN 12667:2001-05 is between 25 to 30 mW/(m*K).

7. A process for producing a composite styrene polymer foam molding according to claims 1 to 6, comprising the steps of
(a) pre-foaming expandable polystyrene to styrene polymer foam particles with a density in the range from 10 to 30 kg/m³,
(b) mixing the styrene polymer foam particles from step (a) with organic nanoporous particles,
(c) filling the mixture obtained in step b) in a mold and welding the mixture with steam to form the composite styrene polymer foam molding.

8. The process according to claim 7, wherein in step (b) 85 - 50% by volume of the foam particles are mixed with 15 - 50% by volume of comminuted monolithic aerogel, based on polyurethane, polyurea or polyisocyanurate or mixtures thereof, having a number weighted mean particle size in the range from 1 to 5 mm.

## Patentansprüche

1. Styrolpolymer-Verbundschaumstoff-Formteil mit einer Dichte im Bereich von 10 bis 50 kg/m³ und umfassend
a) 15 - 50 Vol.-% organische nanoporöse Teilchen und
b) 85 - 50 Vol.-% vorgeschäumte Styrolpolymerteilchen.

2. Styrolpolymer-Verbundschaumstoff-Formteil nach Anspruch 1, wobei es sich bei den organischen nanoporösen Teilchen um nanoporöse thermoplastische Schaumstoffteilchen mit einer Zellenzahl im Bereich von 1000 bis 100 000 Zellen/mm handelt.

3. Styrolpolymer-Verbundschaumstoff-Formteil nach Anspruch 1, wobei es sich bei den organischen nanoporösen Teilchen um zerkleinerte Teilchen eines monolithischen Aerogels auf Basis von Polyurethan, Polyharnstoff oder Polyisocyanurat oder Mischungen davon handelt.

4. Styrolpolymer-Verbundschaumstoff-Formteil nach einem der Ansprüche 1 bis 3, wobei die vorgeschäumten Polystyrolteilchen 1 bis 10 Gew.-% eines IR-Absorbers umfassen.

5. Styrol-Verbundschaumstoff-Formteil nach einem der Ansprüche 1 bis 4, wobei die Dichte der vorgeschäumten Styrolpolymerteilchen im Bereich von 10 bis 50 kg/m³ liegt.

6. Styrol-Verbundschaumstoff-Formteil nach einem der Ansprüche 1 bis 5, wobei die gemäß DIN EN 12667:2001-05 bei 10 °C bestimmte Wärmeleitfähigkeit (λ) zwischen 25 bis 30 mW/(m*K) liegt.

7. Verfahren zur Herstellung eines Styrolpolymer-Verbundschaumstoff-Formteils nach einem der Ansprüche 1 bis 6, umfassend die Schritte:
(a) Vorschäumen von expandierbarem Polystyrol zu Styrolpolymer-Schaumstoffteilchen mit einer Dichte im Bereich von 10 bis 30 kg/m³,
(b) Mischen der Styrolpolymer-Schaumstoffteilchen aus Schritt (a) mit organischen nanoporösen Teilchen,
(c) Füllen der in Schritt b) erhaltenen Mischung in eine Form und Schweißen der Mischung mit Wasserdampf zur Bildung des Styrolpolymer-Verbundschaumstoff-Formteils.

8. Verfahren nach Anspruch 7, wobei in Schritt (b) 85 - 50 Vol.-% der Schaumstoffteilchen mit 15 - 50 Vol.-% zerkleinertem monolithischem Aerogel auf Basis von Polyurethan, Polyharnstoff oder Polyisocyanurat oder Mischungen davon mit einer zahlengewichteten mittleren Teilchengröße im Bereich von 1 bis 5 mm gemischt werden.

## Revendications

1. Moulage en mousse de polymère de styrène composite ayant une densité dans la plage de 10 à 50 kg/m³ et comprenant
a) 15 à 50 % par volume de particules organiques nanoporeuses, et
b) 85 à 50 % par volume de particules de polymère de styrène préexpansé.

2. Moulage en mousse de polymère de styrène composite selon la revendication 1, dans lequel les particules organiques nanoporeuses sont des particules de mousse thermoplastique nanoporeuses ayant un nombre de cellules dans la plage de 1 000 à 100 000 cellules/mm.

3. Moulage en mousse de polymère de styrène composite selon la revendication 1, dans lequel les particules organiques nanoporeuses sont des particules broyées d'un aérogel monolithique à base de polyuréthane, de polyurée ou de polyisocyanurate ou de mélanges correspondants.

4. Moulage en mousse de polymère de styrène composite selon l'une quelconque des revendications 1 à 3, dans lequel les particules de polystyrène préexpansé comprennent 1 à 10 % en poids d'un absorbeur d'IR.

5. Moulage en mousse de styrène composite selon l'une quelconque des revendications 1 à 4, dans lequel la densité des particules de polymère de styrène préexpansé est dans la plage de 10 à 50 kg/m³.

6. Moulage en mousse de styrène composite selon l'une quelconque des revendications 1 à 5, dans lequel la conductivité thermique (λ) déterminée à 10 °C conformément à la norme DIN EN 12667:2001-05 est comprise entre 25 et 30 mW/(m*K).

7. Procédé de production d'un moulage en mousse de polymère de styrène composite selon les revendications 1 à 6, comprenant les étapes de
(a) pré-expansion de polystyrène expansible en particules de mousse de polymère de styrène dotées d'une densité dans la plage de 10 à 30 kg/m³,
(b) mélange des particules de mousse de polymère de styrène de l'étape (a) avec des particules organiques nanoporeuses,
(c) remplissage du mélange obtenu à l'étape b) dans un moule et soudure du mélange avec de la vapeur pour former le moulage en mousse de polymère de styrène composite.

8. Procédé selon la revendication 7, dans lequel à l'étape (b) 85 - 50 % par volume des particules de mousse sont mélangées avec 15 - 50 % par volume d'aérogel monolithique broyé, à base de polyuréthane, de polyurée ou de polyisocyanurate ou de mélanges correspondants, ayant une taille moyenne de particules pondérée en nombre dans la plage de 1 à 5 mm.
